# EUROPÄISCHE PATENTANMELDUNG

(11) **EP 4 656 029 A1**
(43) Veröffentlichungstag der Anmeldung: **03.12.2025**
(21) Anmeldenummer: 25167308.3
(22) Anmeldetag: 31.03.2025
(51) Int. Cl.: A01D 43/08

(54) **SELBSTFAHRENDER FELDHÄCKSLER**

(30) Priorität: 29.05.2024 DE 102024115095
(71) Anmelder: CLAAS Saulgau GmbH, 88340 Bad Saulgau (DE)
(72) Erfinder: Deufel, Tobias, 88605 Meßkirch-Menningen (DE); Löffler, Niklas, 88367 Hohentengen (DE)
(74) Vertreter: CLAAS Gruppe

(57) **Zusammenfassung**

Die Erfindung betrifft eine selbstfahrende Erntemaschine (1), vorzugsweise Feldhäcksler, mit einer Überladevorrichtung (10) zum Überladen eines Erntegutstroms und mit einem an Versorgungsleitungen (44) der Erntemaschine (1) angeschlossenen Unterstützungssystem, das wenigstens teilweise an einem freien Ende (11) der Überladevorrichtung (10) angeordnet ist. Die selbstfahrende Erntemaschine (1) weist eine an der Überladevorrichtung (10) angeordnete Anschlusseinheit (40) mit mehreren Anschlüssen (43) zum Anschließen von Anschlussleitungen (23,25,27,29) des Unterstützungssystems an die Versorgungsleitungen (44) auf.

## Beschreibung

Die vorliegende Erfindung betrifft eine selbstfahrende Erntemaschine nach dem Oberbegriff des Anspruchs 1, eine Überladevorrichtung nach dem Oberbegriff des Anspruchs 14 und ein Verfahren nach dem Oberbegriff des Anspruchs 15.

Aus dem Stand der Technik sind selbstfahrende Erntemaschinen bekannt. Diese umfassen eine Überladevorrichtung zum Überladen beispielsweise eines aus gehäckseltem Erntegut bestehenden Gutstroms auf ein Überladefahrzeug bei der Ernte. Um das Überladen bei der Ernte zu verbessern, ist im Stand der Technik ein Unterstützungssystem an der Überladevorrichtung vorgesehen. Die in der DE 10 2020 114 498 A1 offenbarte selbstfahrende Erntemaschine ist beispielsweise mit einem Unterstützungssystem am freien Ende der Überladevorrichtung ausgestattet, das eine Kamera und eine zum Umlenken von Erntegut ansteuerbare Umlenkeinrichtung umfasst. Beim Warten, Reparieren oder Umbauen der selbstfahrenden Erntemaschine bzw. von der Überladevorrichtung erzeugt das Unterstützungssystem zusätzlichen manuellen Aufwand. So muss beispielsweise beim Umbau an einer Erntemaschine zur Längenänderung der Überladevorrichtung darauf geachtet werden, dass das Unterstützungssystem ordnungsgemäß justiert und angeschlossen ist. Ähnliches gilt für Wartungsarbeiten und Reparaturen an der Überladevorrichtung.

Es ist Aufgabe der vorliegenden Erfindung, die Nachteile des Standes der Technik zu vermeiden. Insbesondere sollen eine Erntemaschine und eine Überladevorrichtung für eine Erntemaschine angegeben werden, die trotz eines an der Überladevorrichtung vorgesehenen Unterstützungssystems einfach zu handhaben ist. Ferner soll ein verbessertes Verfahren zum Inbetriebnehmen oder Außerbetriebnehmen einer Überladevorrichtung bei einer Erntemaschine angegeben werden.

Die Aufgabe wird erfindungsgemäß durch die Merkmale der unabhängigen Ansprüche gelöst. Vorteilhafte Ausführungsformen sind in den Unteransprüchen und in der Beschreibung angegeben.

Vorgeschlagen wird eine selbstfahrende Erntemaschine, vorzugsweise Feldhäcksler, mit einer Überladevorrichtung zum Überladen eines Erntegutstroms und mit einem an Versorgungsleitungen der Erntemaschine angeschlossenen Unterstützungssystem, das wenigstens teilweise an einem freien Ende der Überladevorrichtung angeordnet ist. Die selbstfahrende Erntemaschine umfasst vorschlagsgemäß eine an der Überladevorrichtung angeordnete Anschlusseinheit mit mehreren Anschlüssen zum Anschließen von Anschlussleitungen des Unterstützungssystems an die Versorgungsleitungen.

In anderen Worten, beispielsweise, wird ein selbstfahrender Feldhäcksler vorgeschlagen, der einen Auswurfkrümmer aufweist, an dem die Ernte und/oder das Führen des Erntegutstroms unterstützende Arbeitseinrichtungen vorgesehen sind, die über eine ebenfalls an dem Auswurfkrümmer vorgesehene Anschlussbox an ein Versorgungssystem anschließbar sind.

Die Erfindung hat erkannt, dass ein Unterstützungssystem bislang regelmäßig sehr vielfältig und verschiedenartig angeschlossen war bzw. wurde. Beispielsweise wurden die Anschlussleitungen bisher an einer Mehrzahl von Stellen längs der Überladevorrichtung an die Versorgungsleitungen angeschlossen. Das macht Umbauten, Wartungen und Reparaturen an der Erntemaschine durchaus aufwendig. Außerdem können Montagefehler auftreten. Die Erfindung schafft an dieser Stelle Abhilfe damit, dass die Anschlusseinheit vorgeschlagen wird. Die Anschlusseinheit stellt insbesondere einen zentralen Anschlussbereich für das Unterstützungssystem bereit. Es kann dank der Erfindung leicht erkannt werden, ob das Unterstützungssystem ordnungsgemäß, beispielsweise vollständig, angeschlossen ist. Ebenfalls kann Zeit beim Anschließen und beim Trennen von Anschlüssen eingespart werden. Insbesondere gelingt ein Umbau der Überladevorrichtung dank der Erfindung schneller.

Die Erfindung ermöglicht es ferner, dass das Unterstützungssystem vereinfacht geprüft werden kann, weil seine Anschlussleitungen gut zugänglich gemacht werden. Beispielsweise können die Anschlussleitungen bzw. Anschlusselemente bei Zugang an der Anschlusseinheit schnell und einfach physikalisch gemessen und/oder gereinigt werden.

Ferner ist es so, dass dank der Erfindung die regelmäßig mechanisch behutsam zu behandelnden Anschlüsse für das Unterstützungssystem sich im Grunde an einer Stelle befinden. Damit ist es in der Praxis möglicherweise erleichtert möglich, die Anschlüsse gegen mechanische Einwirkungen zu schützen, sei es durch Vermeidung von mechanischer Einwirkung selbst an der Stelle der Anschlusseinheit oder durch Anbringen von einer lokalen Schutzeinrichtung an der Anschlusseinheit.

Dank der Erfindung können Montagefehler vermieden werden. Die Anzahl an Stellen zur Verbindung der Anschlussleitungen an Versorgungsleitungen kann reduziert werden. Auch ist es möglich, dass die Anzahl an Versorgungsleitungen und/oder Anschlussleitungen reduziert werden kann, beispielsweise indem vormals parallel geführte Leitungen mit im Grunde gleicher Funktion einerseits oder beiderseits der Anschlusseinheit zusammengelegt werden können. Die vorliegend beschriebenen bevorzugten Ausgestaltungsmöglichkeiten der Erfindung bilden die Erfindung vorteilhaft weiter.

Eine selbstfahrende Erntemaschine ist insbesondere ein autonom zu betreibendes und/oder betreibbares landwirtschaftliches Fahrzeug, das Erntearbeiten wie das Mähen, Sammeln und/oder Verarbeiten von Nutzpflanzen teilweise oder vollständig automatisiert vollziehen kann. Selbstfahrend bedeutet insbesondere mannlos betreibbar. Eine selbstfahrende Erntemaschine ist typischerweise mit Sensorsystemen, GPS-Navigation und/oder Software ausgestattet, die zur automatischen Felderkennung und -bearbeitung eingerichtet ist/sind. Selbstfahrende Erntemaschinen bieten beispielsweise unterschiedliche Grade der Automatisierung, von teilautonom, bei dem menschliche Überwachung erforderlich ist, bis hin zu vollständig autonom, bei dem zumindest im Wesentlichen kein menschlicher Eingriff notwendig ist. Zusätzliche Optionen können Mechanismen für das Sortieren und Verpacken der Ernte direkt auf dem Feld umfassen.

Die hier betrachtete selbstfahrende Erntemaschine ist mit einer Überladevorrichtung versehen, um Erntegut überladen zu können. Regelmäßig weist die selbstfahrende Erntemaschine einen Maschinenrahmen, einen am Maschinenrahmen festgelegten Motor und am Maschinenrahmen beweglich angeordnete Bodeneingriffsmittel auf. Am Maschinenrahmen, insbesondere an einer Frontseite der Erntemaschine, ist vorzugsweise ein Vorsatzgerät zum Schneiden bzw. Aufnehmen von Erntegut vorgesehen, beispielsweise das vom Motor antreibbar ist. Die Bodeneingriffsmittel, beispielsweise Räder und/oder Raupenlaufwerke, können vom Motor angetrieben sein, um die Erntemaschine in Fahrtrichtung zu bewegen.

Ein Feldhäcksler ist insbesondere ein landwirtschaftliches Gerät zum Aufnehmen, Zerkleinern und Verladen bzw. Überladen von Erntegut, beispielsweise Gras, Luzerne oder Mais, beispielsweise zur Herstellung von Silage. Beispielsweise ist ein Feldhäcksler zur Zerkleinerung von Stroh ausgebildet.

Die Überladevorrichtung ist insbesondere eine Apparatur bzw. ein Gerät, die/das dazu dient, den Erntegutstrom bzw. geschnittenes und/oder gehäckseltes Erntegut in ein Transportfahrzeug oder einen Anhänger bzw. einen Ladebehälter zu überladen. Die Überladevorrichtung ist in der Regel als ausfahrbarer Arm, langgestreckte Fördereinrichtung und/oder Übergabeeinrichtung für das Erntegut konzipiert. Die Überladevorrichtung ist regelmäßig zum Umlenken bzw. Führen des Ernteguts ausgebildet, wobei die Überladevorrichtung regelmäßig keinen Antrieb zum Beschleunigung des Ernteguts aufweist. Insbesondere fügt die Überladevorrichtung dem Erntegutstrom keine kinetische Energie hinzu. Insbesondere ist die Erntemaschine ausgebildet, den Erntegutstrom in die Überladevorrichtung hinein zu beschleunigen, beispielsweise mittels eines an einem Auswurfschacht angeordneten und/oder an die Überladevorrichtung angrenzenden Nachbeschleunigers der Erntemaschine.

Die Überladevorrichtung weist das freie Ende auf, wobei das freie Ende beispielsweise auskragend ausgebildet ist. Beispielsweise befindet sich das freie Ende abseits bzw. distanziert von einem maschinenzugewandten Ende der Überladevorrichtung. Die Überladevorrichtung ist typischerweise in der Höhe und/oder Neigung verstellbar, um eine flexible Positionierung über dem Ladebehälter bzw. das Einstellen eines Zielbereichs zu ermöglichen. Die Überladevorrichtung kann manuell, halbautomatisch oder vollautomatisch gesteuert werden und ist insbesondere mit dem Unterstützungssystem ausgestatt, die den Vorgang des Überladens unterstützen kann. Die Überladevorrichtung ermöglicht eine kontinuierliche Arbeitsweise der damit ausgestatteten Erntemaschine.

Das Unterstützungssystem ist insbesondere als eine Anordnung von einer oder von mehreren vorzugsweise elektrischen, elektronischen, elektromechanischen, hydraulischen und/oder pneumatischen, Einrichtungen zu verstehen, die insbesondere dazu dienen, den Auswurf bzw. das Überladen von Erntegut zu überwachen, zu steuern und/oder zu beeinflussen. Das Unterstützungssystem ist wenigstens teilweise, vorzugsweise vollständig, an dem freien Ende der Überladevorrichtung angeordnet. Beispielsweise ist das Unterstützungssystem zumindest im Wesentlichen oder vollständig an der Überladevorrichtung angeordnet.

Die Leitungen, insbesondere Anschlussleitungen bzw. Versorgungsleitungen, können als hydraulische, elektrische und/oder pneumatische Leitungen ausgebildet sein. Die Leitungen können ein- oder mehradrig bzw. ein- oder mehrkanalig ausgebildet sein. Die Leitungen sind insbesondere zum Signal-, Medien-, Daten- und/oder Energietransfer ausgebildet. Bei den Leitungen kann es sich um Kabel, Schlauchleitungen und/oder Rohrleitungen handeln, wobei die Aufzählung nicht abschließend ist.

Typischerweise ist die Erntemaschine mit einer Versorgungseinrichtung ausgestattet, die zur Steuerung und/oder zur Energieversorgung ausgebildet ist. Die Versorgungseinrichtung ist vorzugsweise zur Verarbeitung und/oder Bereitstellung von Signalen, Medien, Daten und/oder Energie ausgebildet. Die Versorgungseinrichtung befindet sich regelmäßig innerhalb eines/des Maschinenrahmens der Erntemaschine. Ausgehend von der Versorgungseinrichtung können die Versorgungsleitungen vorgesehen sein und zur Anschlusseinheit geführt sein. Die Versorgungseinrichtung kann mehrteilig sein. Insbesondere kann verstanden werden, dass die Versorgungseinrichtung sich auf diejenigen Einrichtungen bezieht, die eine insbesondere direkt oder indirekt zur Anschlusseinheit geführte Versorgungsleitung bereitstellen. Beispielsweise kann ein Hydraulikaggregat, ein Generator bzw. eine Stromversorgung, eine Steuerung bzw. ein Computer und/oder eine Batterie einen Teil der Versorgungseinrichtung bereitstellen. Die Versorgungseinrichtung kann z.B. das Unterstützungssystem steuern und/oder versorgen und/oder Daten von dieser empfangen.

Unter der Anschlusseinheit ist insbesondere ein System oder eine Schnittstelle zu verstehen, die dazu eingerichtet ist, mehrere Leitungen mittels den mehreren Anschlüssen miteinander zu verbinden. Im Grunde kann die Anschlusseinheit die mehreren Anschlüsse, insbesondere Anschlusselemente, Stecker, Ports, und/oder Buchsen, bereitstellen, um das Unterstützungssystem daran anzuschließen. Die Anschlusselemente können Schraubverbindungsmittel und/oder Steckverbindungsmittel aufweisen, insbesondere zum Verschrauben und/oder Einstecken ausgebildet sein. Die Anschlusseinheit kann auf geringem Bauraum die mehreren Anschlüsse bereitstellen. Beispielsweise befinden sich die mehreren Anschlüsse nebeneinander. Die Anschlusseinheit kann als Anschluss-Hub oder Schnittstelle ausgebildet sein. Die Anschlusseinheit kann beispielsweise eine bevorzugt gemeinsame Halterung für die mehreren Anschlüsse bereitstellen. Vorzugsweise ist die Anschlusseinheit derart an der Überladevorrichtung angeordnet, dass die Anschlussleitungen zumindest im Wesentlichen längs einer Erstreckungsrichtung der Überladevorrichtung an die mehreren Anschlüsse angeschlossen bzw. von diesen getrennt werden können. Die mehreren Anschlüsse können zum freien Ende weisend ausgerichtet sein.

Selbstfahrende landwirtschaftliche Erntemaschinen, insbesondere Feldhäcksler oder Mähdrescher, sind typischerweise mit einer Überladevorrichtung ausgestattet. Die Überladevorrichtung dient insbesondere dazu, während einer Erntefahrt geerntetes Gut bzw. Erntegut, das innere Bearbeitungs- und Förderaggregate der Erntemaschine durchlaufen hat, in einen insbesondere mitfahrenden Ladebehälter zu überladen. Der Ladebehälter kann sich auf einem Anhänger befinden, der von einem Transportfahrzeug, z. B. einem Traktor, gezogen wird. Der Ladebehälter kann Teil eines insbesondere selbstfahrenden Transportfahrzeugs, insbesondere eines Lastwagens, sein. Das Überladen wird regelmäßig über eine durch die Überladevorrichtung überbrückte Distanz, insbesondere zwischen Erntemaschine und Ladebehälter ermöglicht. Während des Überladens stattfindende Lenkbewegungen der Erntemaschine und/oder des Ladebehälters können insbesondere durch die Überladevorrichtung ausgeglichen werden, um ein möglichst verlustfreies Überladen des Erntegutes zu gewährleisten. Hierzu kann das Unterstützungssystem eingerichtet sein.

Die Überladevorrichtung ist regelmäßig langgestreckt ausgebildet. Die Überladevorrichtung kann wenigstens abschnittsweise und/oder segmentweise gekrümmt ausgebildet sein. Typischerweise weist die Überladevorrichtung einen Durchgang für das Erntegut auf, der sich insbesondere zwischen einer maschinenzugewandten Seite und einer maschinenabgewandten Seite erstreckt. Der Durchgang kann bereichsweise über Wartungsklappen oder dergleichen seitlich zugänglich gemacht werden. Die Überladevorrichtung kann als Auswurfkrümmer ausgebildet sein. Beispielsweise kann die Überladevorrichtung, insbesondere bei einem Feldhäcksler, höhenverschwenkbar gegenüber einem Maschinenrahmen der Erntemaschine gelagert sein. Ein zwischen Maschinenrahmen und Überladevorrichtung wirkender Aktor, beispielsweise ein Hubzylinder, kann zur Verstellung der Höhe der Überladevorrichtung vorgesehen sein. Ein Höhensensor, beispielsweise ein Drehpotentiometer, kann einen eingestellten Höhenschwenkwinkel der Überladevorrichtung erfassen. Die Überladevorrichtung ist vorzugsweise mittels eines Drehkranzes der Erntemaschine um eine vertikale Achse drehbar.

Vorzugsweise ist vorgesehen, dass die Überladevorrichtung zumindest zwei miteinander verbundene Segmente zum Führen des Erntegutstroms zum freien Ende aufweist, von denen ein Endstück-Segment das freie Ende bereitstellt. Die Segmente können das Erntegut führen. Die Segmente können, wie auch die Überladevorrichtung, jeweils langgestreckt ausgebildet sein. Die Segmente weisen insbesondere einen Durchgang für das Erntegut auf bzw. bilden den Durchgang der Überladevorrichtung abschnittsweise aus. Einzelne Segmente können mit einer Wartungsklappe versehen sein. Die Segmente können beispielsweise stirnseitige bzw. endseitige Verbindungsbereiche aufweisen, bevorzugt zueinander korrespondierende Flansche. Die Verbindungsbereiche zweier Segmente können an einer Verbindungsstelle miteinander verbunden werden. Durch zwei oder mehr Segmente kann eine Modularität und eine vereinfachte Reparaturmöglichkeit erreicht werden. Insbesondere kann erreicht werden, dass durch Tausch von Segmenten unterschiedliche Überladeweiten, insbesondere Abstände zwischen der Erntemaschine und einem Ladebehälter, darstellbar sind. Ebenfalls wird so die Möglichkeit geschaffen, dass durch Tausch einzelner Segmente Reparaturen durchgeführt werden können.

Es kann von den zumindest zwei miteinander verbundenen Segmenten ein Segment, bevorzugt ein Stutzen-Segment, mit der Anschlusseinheit versehen sein. Ferner kann von den zumindest zwei miteinander verbundenen Segmenten ein Segment, bevorzugt ein/das Stutzen-Segment, beweglich an der Erntemaschine, bevorzugt an einem Drehkranz der Erntemaschine, insbesondere um eine vertikale Achse drehbeweglich an dem Drehkranz, montiert bzw. zu montieren sein. Das Stutzen-Segment kann die Anbindung an einen/den Maschinenrahmen bereitstellen. Die Anbindung an den Maschinenrahmen ist insbesondere beweglich ausgestaltet, vorzugsweise schwenkbar um eine horizontale Achse und/oder schwenkbar um eine/die vertikale Achse. Insbesondere wenn die Anschlusseinheit am Stutzen-Segment angeordnet ist, können die Versorgungsleitungen kurz gehalten werden, um eine Vielzahl an verschiedener mit dem Stutzen-Segment verbundener Segmente bei einfachem Anschluss des Unterstützungssystems zuzulassen.

Es kann vorgesehen sein, dass die zumindest zwei Segmente ein Zwischenstück-Segment oder mehrere davon aufweisen. Das Zwischenstück-Segment bzw. die Zwischenstück-Segmente ist/sind insbesondere zwischen dem Stutzen-Segment und dem Endstück-Segment vorgesehen. Beispielsweise dient das Zwischenstück-Segment als Verlängerung und/oder dazu, den Abstand zwischen Stutzen-Segment und Endstück-Segment einzustellen.

Es ist möglich, dass die Anschlussleitungen längs eines Segments oder mehrerer Segmente, insbesondere am freien Ende, verkleidet und/oder verdeckt geführt sind. Beispielsweise können die Anschlussleitungen wenigstens teilweise und/oder abschnittsweise unter einer Verkleidung der Überladevorrichtung geführt sein und zumindest im Bereich der Anschlusseinheit zur Anschlusseinheit geführt sein. Im Bereich einer Verbindungsstelle von Segmenten und/oder an der Anschlusseinheit können die Anschlussleitungen unverkleidet geführt sein, beispielsweise zur Vereinfachung der Zugänglichkeit.

Vorzugsweise ist die Anschlusseinheit im Bereich einer Verbindungsstelle der zumindest zwei Segmente angeordnet. Die Verbindungsstelle befindet sich insbesondere an stirnseitigen bzw. endseitigen Verbindungsbereichen der Segmente, die miteinander verbunden sind. Die Verbindungsstelle ist beispielsweise im Bereich von miteinander verbundenen oder zu verbindenden Stutzen bzw. Flanschen der zumindest zwei Segmente angeordnet. Die Anschlusseinheit kann angrenzend angrenzend an die Verbindungsstelle vorgesehen sein. Die Anschlusseinheit kann beispielsweise im Bereich zwischen 0 und 50 cm Abstand von der Verbindungsstelle beabstandet sein. So können möglichst kurze Anschlussleitungen erhalten werden. Bei der Montage oder Demontage der Segmente können die Anschlussleitungen in unmittelbarer Nähe direkt mit angeschlossen bzw. gelöst werden, wodurch Aufwand sinkt.

Vorzugsweise ist die Anschlusseinheit auf einer Unterseite der Überladevorrichtung, insbesondere des Stutzen-Segments, angeordnet. Die Unterseite ist zum Untergrund bzw. zum Boden gewandt. Die Unterseite ist insbesondere von einer Oberseite abgewandt. Die Anschlusseinheit kann unterseitig an der Überladevorrichtung angeordnet sein. Die Anschlusseinheit kann insoweit geschützt angeordnet sein. Die Versorgungsleitungen und die Anschlussleitungen können auf diese Weise ebenfalls geschützt zur Anschlusseinheit geführt werden. Insbesondere bietet die Anschlusseinheit auf der Unterseite eine bessere Zugänglichkeit zu den mehreren Anschlüssen.

Vorzugsweise ist die Überladevorrichtung, insbesondere das Stutzen-Segment, mit einer Montageplatte versehen. Die Montageplatte ist vorzugsweise flächig daran bzw. an der Überladevorrichtung angeordnet. Die Montageplatte ist insbesondere zur Befestigung der Anschlusseinheit vorgesehen. Beispielsweise kann die Anschlusseinheit an der Montageplatte festgelegt werden bzw. ist daran festgelegt, beispielsweise verschraubt und/oder eingesteckt. Die Montageplatte schafft eine Beabstandung der Anschlusseinheit zum Erntegutstrom und stellt eine vereinfachte Austauschbarkeit der Anschlusseinheit bereit.

Vorzugsweise ist vorgesehen, dass die Anschlusseinheit eine Anschlussbank mit den mehreren Anschlüssen aufweist, insbesondere wobei die Anschlussbank an der Montageplatte festgelegt ist und/oder zumindest im Wesentlichen orthogonal zu der Überladevorrichtung, bevorzugt zu der Montageplatte, angeordnet ist. Die Anschlussbank kann als beispielsweise einstückig ausgebildete Halterung für die mehreren Anschlüsse verstanden werden. Beispielsweise kann/können die Anschlussbank und/oder die Montageplatte ein Blechteil, beispielsweise ein Metallblech, aufweisen oder daraus hergestellt sein. Die Anschlussbank kann insbesondere benachbarte Ausnehmungen für die mehreren Anschlüsse bereitstellen. Beispielsweise sind die Ausnehmungen in ein Einzelteil der Anschlussbank eingearbeitet. Die mehreren Anschlüsse können in den benachbarten Ausnehmungen der Anschlussbank festgelegt sein. Die Anschlussbank vereinfacht die Befestigung der Anschlusseinheit an der Überladevorrichtung.

Die mehreren Anschlüsse können Anschlusselemente aufweisen. Die Anschlusselemente können eine Anschlussrichtung bzw. Steckrichtung aufweisen, anhand der definiert wird, in welcher Richtung die Anschlussleitungen mit den Anschlusselementen verbunden werden, insbesondere darin eingesteckt werden. Insbeosndere können die Anschlussleitungen zu den Anschlusselementen korrespondierende weitere Anschlusselemente aufweisen. Beispielsweise können die Anschlusselemente derart angeordnet sein, dass die Anschlussleitungen bzw. die weiteren Anschlusselemente längs der Überladevorrichtung bzw. zumindest im Wesentlichen längs ihrer Erstreckungsrichtung angeschlossen werden können. Insoweit kann eine kompakte Überladevorrichtung erhalten werden. Die Anschlusselemente können zum freien Ende weisen.

Die mehreren Anschlüsse können unterschiedlich ausgebildete Anschlusselemente aufweisen. Insbesondere können elektrische Anschlusselemente zueinander unterschiedlich ausgebildet sein. Alternativ oder ergänzend können hydraulische Anschlusselemente zueinander unterschiedlich ausgebildet sein. Damit ist gemeint, dass eine bestimmte Anschlussleitung bzw. deren weiteres Anschlusselement nur an einen bestimmten Anschluss angeschlossen werden kann. Beispielsweise kann dieses Prinzip mittels formschlüssiger und/oder zueinander korrespondierender Anschlusselemente erreicht werden. Insoweit kann eine Verwechselung von Leitungen miteinander bzw. eine Fehlmontage vermieden werden.

Bevorzugt verbindet die Anschlusseinheit elektrische und/oder hydraulische Anschlussleitungen mit den Versorgungsleitungen, bevorzugt werkzeuglos lösbar und/oder ist zum werkzeuglos lösbaren Verbinden bzw. Trennen ausgebildet. Beispielsweise stellt die Anschlusseinheit die gemeinsame Schnittstelle für alle Anschlussleitungen des Unterstützungssystems bereit, an der alle Anschlussleitungen an die Versorgungsleitungen angeschlossen werden können. Zu werkzeuglosen Lösbarkeit können die Anschlussleitungen bzw. die weiteren Anschlusselemente und/oder die Anschlusselemente beispielsweise eine Schnellverbinderkupplung aufweisen.

Vorzugsweise umfasst das Unterstützungssystem eine Umlenkeinrichtung auf. Die Umlenkeinrichtung ist insbesondere zur Einstellung eines Auswurfwinkels des Erntegutstroms verschwenkbar ausgebildet. Die Umlenkeinrichtung ist typischerweise am maschinenabgewandten Ende bzw. abgewandt vom Maschinenrahmen an der Überladevorrichtung angeordnet. Die Umlenkeinrichtung weist vorzugsweise einen Winkelsensor zum Erfassen eines Schwenkwinkels der Umlenkeinrichtung auf. Die Umlenkeinrichtung kann insbesondere bezüglich einer Horizontalebene oder zumindest im Wesentlichen parallel dazu verschwenkt werden. Eine Anschlussleitung des Winkelsensors ist insbesondere an einen elektrischen Anschluss der mehreren Anschlüsse angeschlossen. Die Umlenkeinrichtung weist insbesondere ein Klappenelement oder mehrere davon auf. Der Erntegutstrom kommt typischerweise mit der Umlenkeinrichtung in Kontakt, um diesen umzulenken. Anders gesagt, beispielsweise, kann der Erntegutstrom an der Umlenkeinrichtung abprallen. Der Auswurfwinkel bezieht sich insbesondere auf die Horizontalebene, so dass eine Auswurfweite des Ernteguts in Abhängigkeit vom Auswurfwinkel steht. Beispielsweise kann durch Verschwenken der Umlenkeinrichtung, insbesondere des Klappenelements, der Erntegutstrom umgelenkt werden, um insbesondere während des Betriebs der Erntemaschine zielen zu können. Über den Winkelsensor kann erkannt werden, in welcher Stellung die Umlenkeinrichtung, insbesondere das Klappenelement, sich befindet. Insbesondere der Winkelsensor kann an die Anschlusseinheit angeschlossen werden, um ein den Schwenkwinkel enthaltendes Signal, z.B. an eine Versorgungseinrichtung, zu übermitteln.

Die Erntemaschine, insbesondere das Unterstützungssystem, kann einen Aktor zum Verschwenken der Umlenkeinrichtung aufweisen, insbesondere wobei eine Anschlussleitung des Aktors an einen elektrischen und/oder hydraulischen Anschluss der mehreren Anschlüsse angeschlossen ist. Der Aktor ist insbesondere mit der Umlenkeinrichtung bzw. dem Klappenelement wirkverbunden und kann durch Aktuieren diese/diesen verschwenken. Der Aktor kann als Hydraulikzylinder und/oder als elektrischer Aktor, beispielsweise Linearantrieb oder Rotationsantrieb, ausgebildet sein bzw. diesen aufweisen. Mit dem Aktor kann die Umlenkeinrichtung bzw. der Schwenkwinkel präzise verstellt werden, um den Erntegutstrom bzw. den Auswurfwinkel während der Ernte zu beeinflussen.

Vorzugsweise ist vorgesehen, dass das Unterstützungssystem eine Kamera zum Erfassen eines Zielbereichs aufweist, insbesondere wobei eine Anschlussleitung der Kamera an einen elektrischen Anschluss der mehreren Anschlüsse angeschlossen ist. Mittels der Kamera kann der Zielbereich erfasst werden, insbesondere welchem von der Erntemaschine aufgenommenes Erntegut mittels der Überladevorrichtung zugeführt werden soll. Die Kamera kann beispielsweise einen mitfahrenden Ladebehälter erfassen und/oder eine Bildübertragung bzw. Videoaufzeichnung bereitstellen. Die Kamera kann am freien Ende oder beabstandet hierzu angeordnet sein. Die Kamera kann beabstandet zu einer an der Überladevorrichtung vorgesehenen Umlenkeinrichtung angeordnet sein. Mittels der Kamera kann ein Bild des freien Endes, insbesondere eines Abschnittes des freien Endes, erzeugt bzw. erfasst werden. Die Kamera kann insbesondere dreidimensionale Daten bereitstellen und über die Anschlussleitung der Kamera übermitteln, beispielsweise an die Versorgungseinrichtung. Das Bild und/oder die Daten können durch die Versorgungseinrichtung und/oder eine Recheneinheit einer Steuerungsvorrichtung der Erntemaschine ausgewertet werden. Insbesondere anhand der Auswertung kann eine Position der Kamera bezüglich eines Abstands und/oder einer Neigung insbesondere zur Umlenkeinrichtung bestimmt werden. Die Kamera selbst kann als Sensor verwendet werden, um ihre Position, insbesondere der tatsächliche Abstand der Kamera zur Umlenkeinrichtung und/oder die eingestellte tatsächliche Neigung der Kamera zur Umlenkeinrichtung, zu detektieren. Insbesondere kann die Umlenkeinrichtung einen Referenzpunkt bilden, auf den bezogen die erfolgte Anordnung der Kamera überprüft werden kann. Das Bild bzw. die Daten können/kann ausgewertet werden, um zu bestimmen, ob das Erntegut einen Zielbereich trifft, treffen kann und/oder treffen wird. Ebenfalls kann die Position der Kamera überprüft werden. Auf diese Weise kann ein zuverlässiger Betrieb der Kamera bei der Erkennung des Zielbereiches sowie beim anschließenden Vorgang des Überladens gewährleistet werden. Bevorzugt kann als Kamera eine 3D-Kamera zum Einsatz kommen. Die 3D-Kamera kann beispielsweise eine Stereokamera oder eine TOF-Kamera, insbesondere eine nach dem Laufzeitverfahren arbeitende Kamera sein. Zur Erzeugung von 3D-Bildern kann auch Lidar, insbesondere Flash-Lidar, zur Anwendung kommen.

Die Kamera kann einen Aktor zur Einstellung der Neigung der Kamera relativ zur Überladevorrichtung und/oder zur Bewegung der Kamera aufweisen, insbesondere wobei eine Anschlussleitung des Aktors der Kamera an einen elektrischen Anschluss der mehreren Anschlüsse angeschlossen ist. Beispielsweise kann die Kamera von der Versorgungseinrichtung oder ggf. von Bedienpersonal geneigt bzw. bewegt werden. Mittels des Aktors kann die Kamera beispielsweise um eine Achse, insbesondere eine horizontale Achse und/oder eine vertikale Achse, geneigt werden. Durch den Aktor der Kamera kann ein größerer Zielbereich erfasst werden und das Überladen des Ernteguts kann treffsicherer erfolgen. Es ist möglich, dass durch den Aktor das Anwendungsspektrum der Erntemaschine erweitert wird.

Vorzugsweise ist vorgesehen, dass das Unterstützungssystem eine Beleuchtungseinrichtung aufweist, insbesondere wobei eine Anschlussleitung der Beleuchtungseinrichtung an einen elektrischen Anschluss der mehreren Anschlüsse angeschlossen bzw. anzuschließen ist. Die Beleuchtungseinrichtung kann auf einen/den Zielbereich weisend ausgerichtet sein. Die Beleuchtungseinrichtung kann den Zielbereich beleuchten. Insbesondere stellt die Beleuchtungseinrichtung eine Möglichkeit zur Ausleuchtung im Umfeld der Überladevorrichtung bereit. Die Beleuchtungseinrichtung weist typischerweise ein oder mehrere Leuchtmittel, insbesondere eine oder mehrere LEDs, und vorzugsweise einen oder mehrere Reflektoren auf. Die Leuchtmittel können über die Anschlussleitung mit Elektrizität versorgt werden, insbesondere ein- und ausgeschaltet werden.

Weiter wird eine Überladevorrichtung für eine bzw. die selbstfahrende Erntemaschine, vorzugsweise für einen Feldhäcksler, vorgeschlagen, wobei die Überladevorrichtung zum Überladen eines Erntegutstroms ausgebildet ist und ein freies Ende aufweist, wobei die Überladevorrichtung zur Befestigung eines an Versorgungsleitungen der Erntemaschine anzuschließenden Unterstützungssystems wenigstens teilweise an dem freien Ende ausgebildet ist, und wobei eine Anschlusseinheit mit mehreren Anschlüssen zum Anschließen von Anschlussleitungen des Unterstützungssystems an die Versorgungsleitungen vorgesehen ist. Beispielsweise wird hiermit die Überladevorrichtung der selbstfahrenden Erntemaschine vorgeschlagen. Insbesondere kann die Überladevorrichtung das Unterstützungssystem zumindest teilweise aufweisen und/oder mit einzelnen oder mehreren Merkmalen der vorgeschlagenen selbstfahrenden Erntemaschine versehen sein. Die Beschreibung, insbesondere die vorteilhaften Ausgestaltungsmöglichkeiten, zur selbstfahrenden Erntemaschine kann/können entsprechend angewendet werden. Die Überladevorrichtung ist beispielsweise ein modular aufgebauter Auswurfkrümmer, der mit der vorliegend beschriebenen Anschlusseinheit versehen ist, und zusätzlich mit einem Unterstützungssystem, beispielsweise einer Kamera, einer Beleuchtungseinrichtung und/oder einer Umlenkeinrichtung, und/oder mit insbesondere bereits montierten Anschlussleitungen eines/des Unterstützungssystems versehen sein kann.

Weiter wird ein Verfahren zum Inbetriebnehmen oder Außerbetriebnehmen einer bzw. der Überladevorrichtung bei einer Erntemaschine, insbesondere bei der vorgeschlagenen Erntemaschine, vorgeschlagen. Das Verfahren weist insbesondere ein Verbinden von Segmenten der Überladevorrichtung und danach ein Anschließen der Anschlussleitungen des Unterstützungssystems an die mehreren Anschlüsse auf. Das Verfahren weist alternativ oder ergänzend ein Trennen der Anschlussleitungen des Unterstützungssystems von den mehreren Anschlüssen und danach ein Trennen von Segmenten der Überladevorrichtung auf. Das vorgeschlagene Verfahren

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben.

Es zeigen:
- Figur 1: eine schematische Seitenansicht einer selbstfahrenden Erntemaschine;
- Figur 2: eine weitere schematische Seitenansicht einer selbstfahrenden Erntemaschine;
- Figur 3: einer perspektivische Ansicht einer Überladevorrichtung einer selbstfahrenden Erntemaschine; und
- Figur 4A-C: ausschnittsweise perspektivische Ansichten der Überladevorrichtung aus Figur 3.

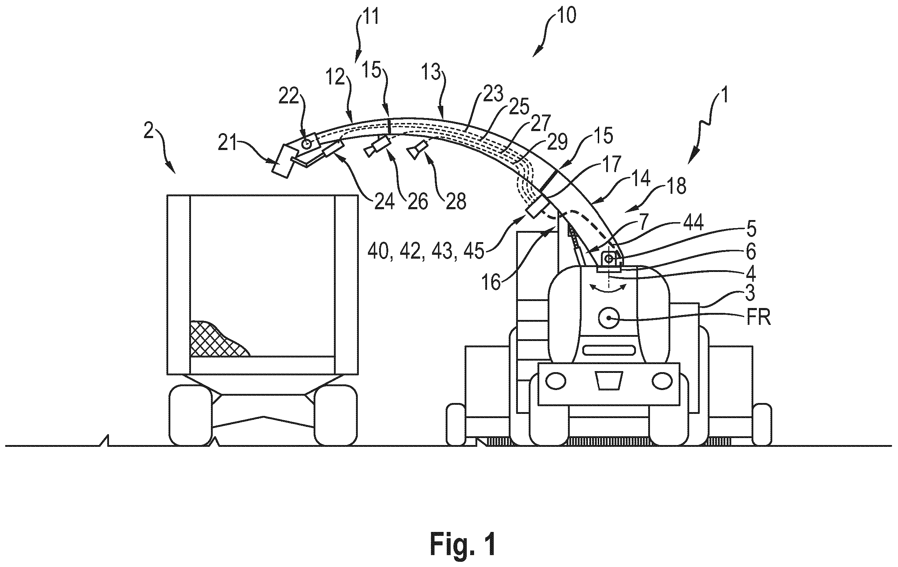

Fig. 1 zeigt eine selbstfahrende Erntemaschine 1, die als Feldhäcksler ausgebildet ist und ferner ausgebildet ist, längs einer Fahrtrichtung FR zu fahren. Neben der Erntemaschine 1 ist ein Ladebehälter 2 angeordnet, der ebenfalls längs der Fahrtrichtung FR bewegt werden kann. Die Erntemaschine 1 enthält einen nicht detailliert gezeigten Motor zum Antreiben von Bodeneingriffsmitteln, beispielsweise Rädern, sowie zum Antreiben eines an einer Frontseite der Erntemaschine 1 montierten Vorsatzgerätes. Das Vorsatzgerät kann Erntegut vom Boden aufnehmen. Das Erntegut kann als Erntegutstrom mittels einer als Auswurfkrümmer ausgebildeten Überladevorrichtung 10 an den Ladebehälter überladen werden.

Während einer Erntefahrt schneidet der Feldhäcksler mittels des Vorsatzgeräts beispielsweise Pflanzen von einem Feld, um geerntetes Pflanzenmaterial als das Erntegut über Einzugsorgane einem Häckselaggregat zuzuführen. In dem Häckselaggregat wird das Erntegut zerkleinert und gelangt in einen Förderschacht, der sich vom Häckselaggregat, das vorliegend unterhalb einer Fahrerkabine angeordnet ist, mit aufsteigendem Verlauf in einen Bereich hinter der Fahrerkabine erstreckt und in die Überladevorrichtung 10 mündet.

Die Überladevorrichtung 10 ist um eine horizontale Achse 5 höhenverschwenkbar gegenüber einem Maschinenrahmen 3 der Erntemaschine 1 gelagert. Ein zwischen Maschinenrahmen 3 und Überladevorrichtung 10 wirkende Hubeinrichtung 7 mit einem Hubzylinder dient zur Verstellung der Höhe der Überladevorrichtung 10. Die Überladevorrichtung 10 ist mittels eines Drehkranzes 6 um eine vertikale Achse 4 drehbeweglich am Maschinenrahmen 3 gelagert. Der Drehkranz 6 ist an dem Maschinenrahmen 3 der Erntemaschine 1 festgelegt. Der Drehkranz 6 befindet sich an einem Auswurfschacht des Feldhäckslers.

Der Feldhäcksler weist ein an Versorgungsleitungen 44 der Erntemaschine 1 angeschlossenes Unterstützungssystem auf. Das Unterstützungssystem ist wenigstens teilweise an einem freien Ende der Überladevorrichtung 10 angeordnet. Die Erntemaschine 1 weist ferner eine nicht detailliert gezeigte Versorgungseinrichtung auf, die zur Steuerung und/oder zur Energieversorgung des Unterstützungssystems ausgebildet ist. Insbesondere stellt die Versorgungseinrichtung die Versorgungsleitungen 44 bereit. Beispielsweise weist die Versorgungseinrichtung, an die Versorgungsleitungen 44 direkt oder indirekt angeschlossen, einen Steuerungscomputer, eine Stromversorgung und/oder ein Hydraulikaggregat auf. Die Versorgungseinrichtung kann das Unterstützungssystem steuern und mit Energie versorgen.

Das Unterstützungssystem weist vorliegend einen Winkelsensor 22 und einen Aktor 24 auf, die mit einer Umlenkeinrichtung 21 des Unterstützungssystems wirkverbunden sind. Die Umlenkeinrichtung 21 ist am maschinenabgewandten Ende der Überladevorrichtung 10 angeordnet, wobei durch dessen Verschwenkbarkeit sich ein Auswurfwinkel des Ernteguts aus der Überladevorrichtung 10 beeinflussen bzw. einstellen lässt. Das Verschwenken der Umlenkeinrichtung 21 wird vorliegend durch den als Stellzylinder ausgebildeten Aktor 24 bewirkt, wobei der Winkelsensor 22 die Stellung eines endseitigen Klappenelementes der Umlenkeinrichtung 21 bzw. einen Schwenkwinkel der Umlenkeinrichtung 21 erfassen kann. Insbesondere in Kombination mit einem Höhensensor, beispielsweise ein Winkelsensor bezüglich der horizontalen Achse 5, beispielsweise am Drehkranz 6, lässt sich aus der Winkelstellung der Umlenkeinrichtung 21 der Auswurfwinkel gegenüber einer Horizontalebene errechnen.

Ferner weist das Unterstützungssystem vorliegend eine Kamera 26 zum Erfassen eines Zielbereichs und eine Beleuchtungseinrichtung 28 auf. Beispielsweise kann mithilfe der Kamera 26 ein Auftreffpunkt des im Erntebetrieb ausgeworfenen Ernteguts und/oder eine optische Erfassung von Lage, Form, Abmessung und/oder Befüllzustand des Ladebehälters 2 bestimmt werden. Die Kamera 26 ist vorzugsweise als 3D-Kamera, insbesondere Stereokamera, ausgeführt. Optional kann die Kamera 26 mittels eines Aktors der Kamera geneigt werden. Die Beleuchtungseinrichtung 28 kann den Zielbereich und/oder den Auftreffpunkt beleuchten und/oder in Richtung eines Blickfelds der Kamera 26 leuchten.

An der Überladevorrichtung 10 ist ferner eine Anschlusseinheit 40 mit mehreren Anschlüssen 43 angeordnet, mittels der das Unterstützungssystem an die Versorgungsleitungen 44 angeschlossen ist. Die mehreren Anschlüsse 43 sind zum Anschließen von vier Anschlussleitungen 23, 25, 27, 29 des Unterstützungssystems an die Versorgungsleitungen 44 vorgesehen bzw. eingerichtet.

Vorliegend ist die Überladevorrichtung 10 modular bzw. segmentiert aufgebaut, beispielsweise um unterschiedliche Überladeweiten, d.h. Abstände zwischen der Erntemaschine 1 und dem Ladebehälter 2 darstellen zu können. Die Überladevorrichtung 10 weist insoweit drei miteinander verbundene Segmente 12, 13, 14 zum Führen des Erntegutstroms zum freien Ende 11 und bis hin zur Umlenkeinrichtung 21 auf. Ein Endstück-Segment 12 stellt das freie Ende 11 wenigstens abschnittsweise bereit. Ein Stutzen-Segment 14 ist mit der Anschlusseinheit 40 versehen und ist um die vertikale Achse 4 drehbeweglich an dem Drehkranz 6 montiert. Zwischen dem Stutzen-Segment 14 und dem Endstück-Segment 12 ist vorliegend ein Zwischenstück-Segment 13 angeordnet. Die Segmente 12, 13, 14 sind an Verbindungsstellen 15, beispielsweise über Flansche und/oder Schraubverbindungen, miteinander verbunden. Die Anschlusseinheit 40 ist im Bereich der Verbindungsstelle 15 von Stutzen-Segment 14 und Zwischenstück-Segment 13 vorgesehen, insbesondere am Stutzen-Segment 14.

Vorliegend ist das Unterstützungssystem wenigstens teilweise an dem Endstück-Segment 14 bzw. an dem Zwischenstück-Segment 13 angeordnet bzw. daran festgelegt. Beispielsweise ist die Kamera 26 an dem Endstück-Segment 14 angeordnet. Beispielsweise ist die Beleuchtungseinrichtung 28 an dem Zwischenstück-Segment 13 angeordnet.

Die Versorgungsleitungen 44 sind vorliegend ausgehend vom Maschinenrahmen 3 längs des Stutzen-Segments 14 zur Anschlusseinheit 40 geführt, insbesondere daran festgelegt. Die Anschlussleitungen 23, 25, 27, 29 sind vorliegend längs des Zwischenstück-Segments 13 und zumindest teilweise längs des Endstück-Segments 12 geführt, insbesondere daran festgelegt.

Die Überladevorrichtung 10 bzw. das Stutzen-Segment 14 ist vorliegend mit einer flächig daran befestigten Montageplatte 17 versehen, an der die Anschlusseinheit 40 festgelegt ist. Die Anschlusseinheit 40 ist insbesondere auf einer Unterseite 16 der Überladevorrichtung 10 angeordnet. Insoweit kann das Unterstützungssystem abseits bzw. abgewandt von einer Oberseite 18 an die Versorgungsleitungen 44 angeschlossen werden.

Die Anschlusseinheit 40 weist eine Anschlussbank 42 mit den mehreren Anschlüssen 43 auf, wobei die Anschlussbank 42 zumindest im Wesentlichen orthogonal vorstehend zu der Überladevorrichtung 10 bzw. der Montageplatte 17 angeordnet ist. Die mehreren Anschlüsse 43 sind in benachbarten Ausnehmungen 45 der Anschlussbank 42 festgelegt und weisen vorteilhaft zur Vermeidung von Montagefehlern unterschiedlich ausgebildete Anschlusselemente auf. Beispielsweise können Anschlusselemente der mehreren Anschlüsse 43 mit einer Anschlussrichtung bzw. Steckrichtung längs der Überladevorrichtung 10 angeschlossen werden, die platzsparend ist.

Die Anschlusseinheit 40 verbindet elektrische und hydraulische Anschlussleitungen 23, 25, 27, 29 mit den Versorgungsleitungen 44, insbesondere derart, dass die Anschlussleitungen 23, 25, 27, 29 werkzeuglos lösbar sind.

Eine Anschlussleitung 23 des Winkelsensors 22 ist an einem elektrischen Anschluss der mehreren Anschlüsse 43 angeschlossen. Eine Anschlussleitung 25 des Aktors 24 ist an einen hydraulischen Anschluss der mehreren Anschlüsse 43 angeschlossen. Eine Anschlussleitung 27 der Kamera 26 ist an einen elektrischen Anschluss der mehreren Anschlüsse 43 angeschlossen. Eine Anschlussleitung 29 der Beleuchtungseinrichtung 28 ist an einen elektrischen Anschluss der mehreren Anschlüsse 43 angeschlossen.

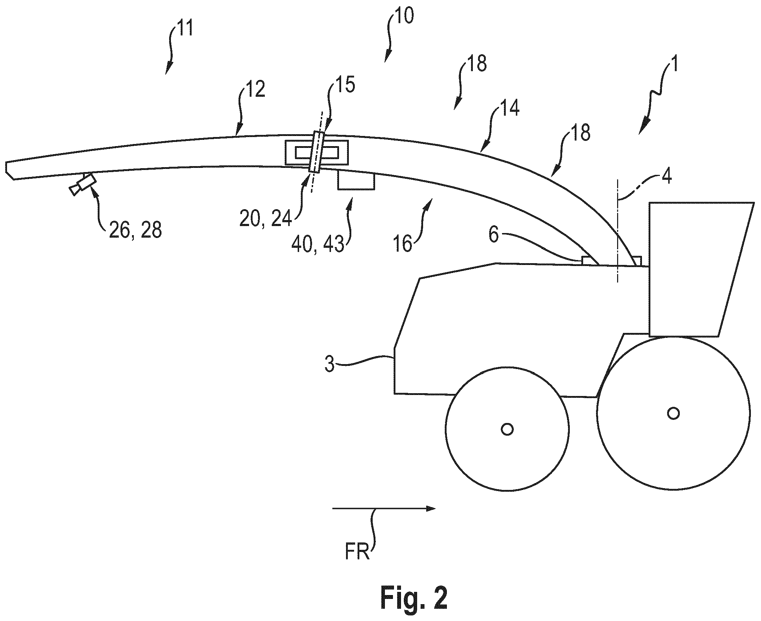

Bezugnehmend auf Fig. 2 ist eine weitere Ausführungsform einer selbstfahrenden Erntemaschine 1 gezeigt, die als Feldhäcksler ausgebildet ist. Nicht dargestellt ist ein an einer Frontseite angeordnetes Vorsatzgerät, mit dem Erntegut aufgenommen werden kann. Ein nicht detailliert dargestellter Motor kann die Bodeneingriffsmittel, vorliegend Räder, sowie das Vorsatzgerät antreiben. Das Erntegut kann in einer im Innern eines Maschinenrahmens 3 angeordneten, nicht detailliert gezeigten Häckseltrommel zerkleinert werden und nach dem Zerkleinern in einen hinter einer Fahrerkabine aufsteigenden Auswurfschacht ausgegeben werden. Ein an dem Auswurfschacht angeordneter Nachbeschleuniger kann das Erntegut dann durch eine Überladevorrichtung 10 vom Feldhäcksler weg schleudern, beispielsweise auf einen mitfahrenden bzw. mitgeführten, vorliegend nicht gezeigten Ladebehälter. Die Überladevorrichtung 10 ist relativ zu dem Maschinenrahmen 3 mittels eines Drehkranzes 6 um eine vertikale Achse 4 drehbar. Optional kann die Überladevorrichtung um eine horizontale Achse relativ zu dem Maschinenrahmen 3 geschwenkt werden.

Die Überladevorrichtung 10 ist modular aufgebaut und weist insoweit ein Stutzen-Segment 14 und ein Endstück-Segment 12 auf, die an einer Verbindungsstelle 15 miteinander verbunden sind. Die Segmente 12 und 14 sind vorliegend um eine, insbesondere im Wesentlichen vertikale, Achse insbesondere mittels Schwenkgelenk 20 an der Verbindungsstelle 15 schwenkbar miteinander verbunden, um die Überladevorrichtung 10 bzw. das Endstück-Segment 12 einklappen zu können. Ein Aktor 24 kann die Segmente 12, 14 zueinander schwenken.

An einem freien Ende 11 der Überladevorrichtung 10, welches durch das Endstück-Segment 12 gebildet ist, sind eine Kamera 26 zum Erfassen eines Zielbereichs und eine Beleuchtungseinrichtung 28 zum Beleuchten angeordnet. Der Aktor 24, die Kamera 26 und die Beleuchtungseinrichtung 28 sind Teil eines Unterstützungssystems, das insoweit wenigstens teilweise an dem freien Ende 11 angeordnet ist.

An einer Unterseite 16 des Stutzen-Segments 14 bzw. abgewandt von einer Oberseite 18 ist eine Anschlusseinheit 40 mit mehreren Anschlüssen 43 zum Anschließen des Unterstützungssystems an elektrische und hydraulische Versorgungsleitungen des Feldhäckslers festgelegt. Die Anschlusseinheit 40 befindet sich im Bereich der Verbindungsstelle 15. Beispielsweise wenn das Endstück-Segment 12 getauscht wird, können die vorliegend nicht detailliert gezeigten Anschlussleitungen des Unterstützungssystem von den vorliegend nicht detailliert gezeigten Versorgungsleitungen an der Anschlusseinheit 40 getrennt werden.

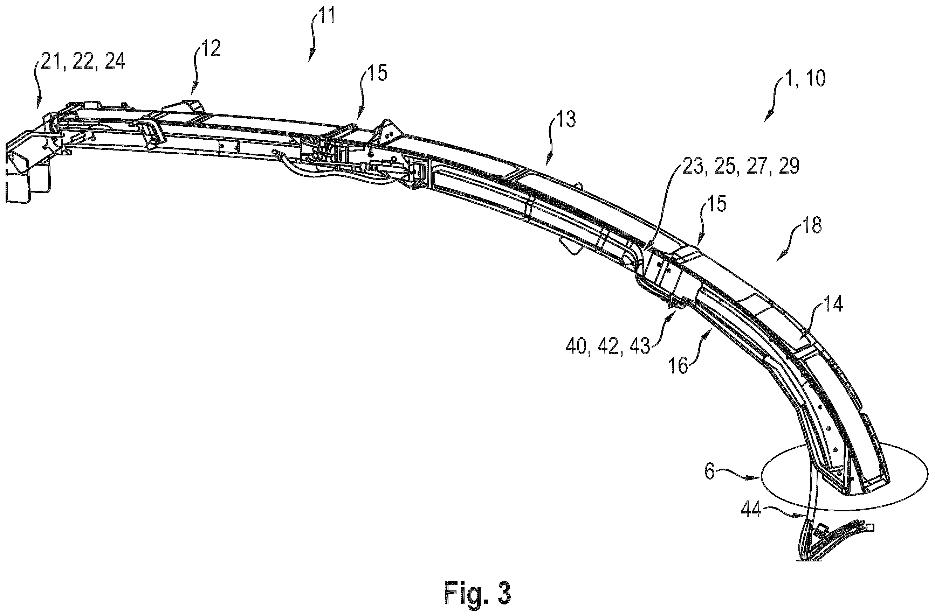

Fig. 3 zeigt eine Überladevorrichtung 10 einer selbstfahrenden Erntemaschine 1 bzw. für eine selbstfahrende Erntemaschine 1, vorzugsweise Feldhäcksler, beispielsweise für den in Fig. 1 1 gezeigten Feldhäcksler. Die Überladevorrichtung 10 ist als Auswurfkrümmer ausgebildet. Die Überladevorrichtung 10 ist mit einem an Versorgungsleitungen 44 angeschlossenen Unterstützungssystem versehen, das wenigstens teilweise an einem freien Ende 11 der Überladevorrichtung 10 angeordnet ist.

Typischerweise sind die Versorgungsleitungen 44 Teil der Erntemaschine 1. Optional können die Versorgungsleitungen auch, zumindest teilweise, von der Überladevorrichtung 10, der Anschlusseinheit 40 und/oder dem Unterstützungssystem bereitgestellt werden.

Die Überladevorrichtung 10 weist drei an Verbindungsstellen 15 miteinander verbundene Segmente 12, 13, 14 zum Führen eines Erntegutstroms zum freien Ende 11 auf, von denen ein Endstück-Segment 12 das freie Ende 11 bereitstellt, von denen ein Stutzen-Segment 14 mit einer Anschlusseinheit 40 versehen ist und zur drehbeweglichen Montage an einem Drehkranz 6 der Erntemaschine 1 vorgesehen ist, und von denen ein Zwischenstück-Segment 13 als eine Verlängerung zwischen dem Stutzen-Segment 14 und dem Endstück-Segment vorgesehen ist. Die Segmente 12, 13, 14 sind gekrümmt ausgeformt. Optional kann auch zumindest ein weiteres Segment 13, 14, beispielsweise das Zwischenstück-Segment 13, das freie Ende 11 zumindest abschnittsweise bilden. Beispielsweise kann verstanden werden, dass sich das freie Ende 11 über mehr als ein Segment 12, 13, 14 erstreckt.

Das Unterstützungssystem weist eine zur Einstellung eines Auswurfwinkels des Erntegutstroms verschwenkbare Umlenkeinrichtung 21 mit einem Winkelsensor 22 zum Erfassen eines Schwenkwinkels der Umlenkeinrichtung 21 auf. Die Umlenkeinrichtung weist ein Klappenelement auf, das gegenüber einer Horizontalebene bzw. um eine Schwenkachse verschwenkt werden kann, um den Erntegutstrom umzulenken. Das Klappenelement kann mittels eines hydraulisch betätigbaren Aktors 24 verschwenkt werden. Insbesondere kann der Winkelsensor 22 den Schwenkwinkel direkt oder indirekt am Klappenelement erfassen. Anschlussleitungen 23, 25 insbesondere für den Aktor 24 und den Winkelsensor 22 sind vom freien Ende 11 bis hin zur Anschlusseinheit 40 geführt.

Die Anschlusseinheit 40 weist mehrere Anschlüsse 43 zum Anschließen von elektrischen und hydraulischen Anschlussleitungen 23, 25, 27, 29 insbesondere des Unterstützungssystems an die Versorgungsleitungen 44 auf. Die mehreren Anschlüsse 43 weisen zum freien Ende 11 und erleichtern das Verbinden und das Trennen der Anschlussleitungen 23, 25, 27, 29. Die Anschlussleitung 23 des Winkelsensors 22 ist an einen elektrischen Anschluss der mehreren Anschlüsse 43 angeschlossen. Die Anschlussleitung 25 des Aktors 24 ist an einen hydraulischen Anschluss der mehreren Anschlüsse 43 angeschlossen. Die Anschlussleitungen 23, 25, 27, 29 können insbesondere werkzeuglos von den mit den Versorgungsleitungen 44 gelöst bzw. getrennt und damit verbunden werden.

Die Anschlusseinheit 40 ist im Bereich der Verbindungsstelle 15, die sich zwischen Stutzen-Segment 14 und Zwischenstück-Segment 13 befindet, insbesondere an einer Unterseite 16 bzw. abgewandt von einer Oberseite 18, am Stutzen-Segment 14 angeordnet.

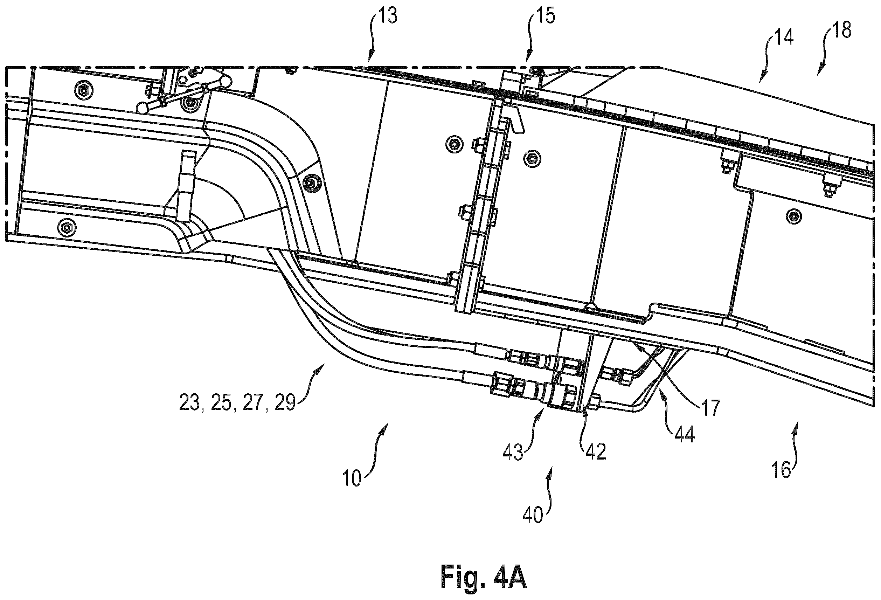

Figuren 4A-C zeigen Details der Figur 3. Insoweit gilt die Beschreibung zur Figur 3 entsprechend bei den Figuren 4A-C.

Insbesondere mit Blick auf Figur 4A ist ersichtlich, dass die Segmente 13 und 14 stirnseitige Verbindungsbereiche in Form zueinander korrespondierender Flansche aufweisen, insbesondere durch welche Flansche Erntegut geleitet werden kann. Die Flansche sind vorliegend an der Verbindungsstelle 15 über Schraubverbindungen lösbar miteinander verbunden. In der Nähe der Verbindungsstelle 15 befindet sich die Anschlusseinheit 40, wobei beim Verbinden oder Trennen von den Segmenten 13 und 14 die Anschlussleitungen 23, 25, 27, 29 im Grunde gleichzeitig bzw. unmittelbar nacheinander angeschlossen bzw. getrennt werden können und die Anschlussleitungen 23, 25, 27, 29 insbesondere nicht von der Überladevorrichtung 10 bzw. den jeweiligen Segmenten 12, 13, 14 demontiert werden müssen. Gut erkennbar ist insbesondere, dass die Versorgungsleitungen 44 parallel verlaufend zu den mehreren Anschlüssen 43 führen.

Insbesondere weist die Anschlusseinheit 40 eine Anschlussbank 42 mit den mehreren Anschlüssen 43 auf, wobei die Anschlussbank 43 an einer Montageplatte 17 festgelegt ist und zumindest im Wesentlichen orthogonal zu der Überladevorrichtung 10 bzw. der Montageplatte 17 verlaufend angeordnet ist. Die Montageplatte 17 ist flächig am Stutzen-Segment 14 benachbart zur Verbindungsstelle 15 angeordnet bzw. daran festgelegt. Die Montageplatte 17 verläuft zumindest im Wesentlichen parallel zu einem durch die Überladevorrichtung 10 geführten bzw. zu führenden Erntegutstrom. Die mehreren Anschlüsse 43 können mit einer Bewegung zumindest im Wesentlichen parallel zur Überladevorrichtung 10 verbunden bzw. getrennt werden, da die mehreren Anschlüsse 43 zum freien Ende 11 weisen, das in Figur 4A prinzipiell linksseitig angeordnet ist. Die mehreren Anschlüsse 43 weisen unterschiedlich ausgebildete Anschlusselemente auf, um fehlerhaftes Anschließen zu vermeiden.

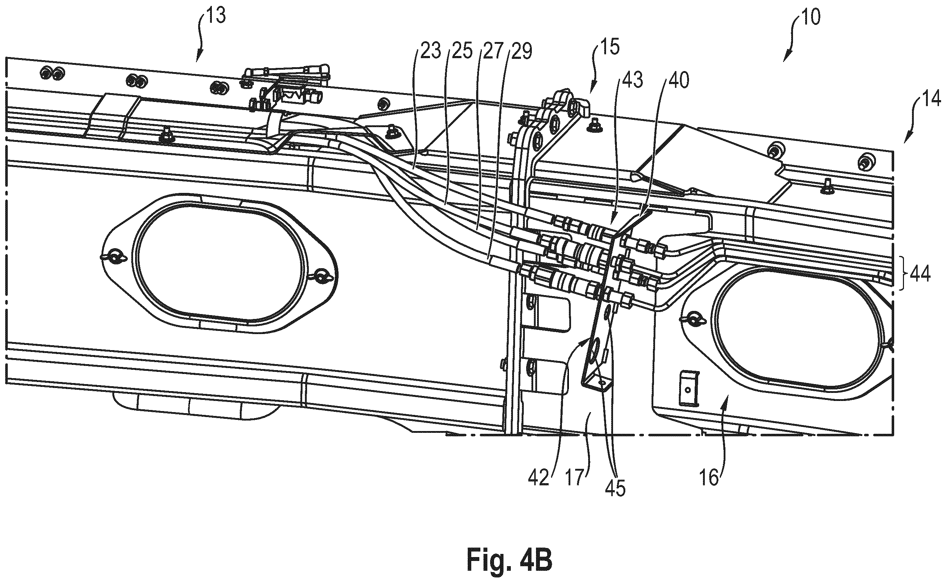

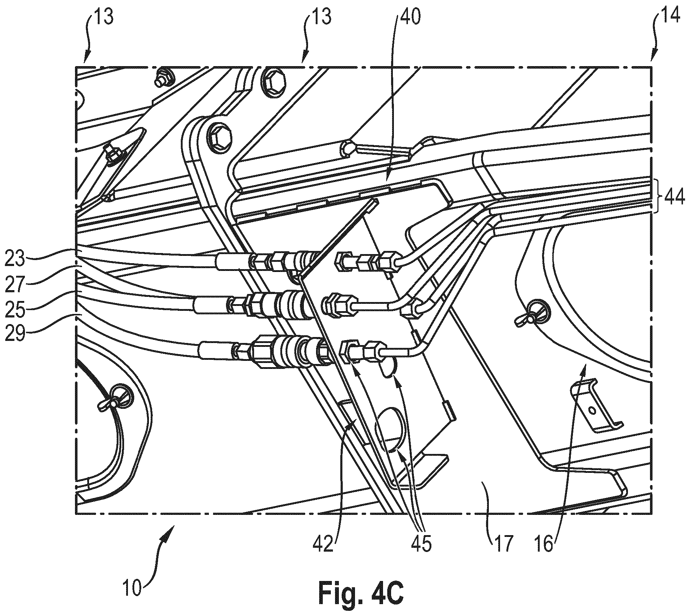

Mit Blick auf Figur 4B und 4C ist insbesondere ersichtlich, dass die Anschlussbank 42 benachbarte Ausnehmungen 45 aufweist, in denen die mehreren Anschlüsse 43 festgelegt sind. Die Anschlussbank 42 weist vorliegend vier Anschlüsse 43 in vier Ausnehmungen 45 auf, wobei zwei weitere Ausnehmungen 45 nicht mit einem Anschluss versehen sind. Insoweit wird eine Modularität bzw. Erweiterbarkeit geschaffen, beispielsweise wenn weitere Anschlussleitungen mittels der Anschlusseinheit 40 angeschlossen werden sollen. Die Anschlussleitungen 23, 25, 27, 29 sind abschnittsweise längs des Zwischenstück-Segments 13, insbesondere verkleidet, geführt und im Bereich der Verbindungsstelle 15 zur Unterseite 16 geführt. Die Montageplatte 17 und/oder die Anschlussbank 42 weisen vorzugsweise ein Blechteil auf oder sind daraus hergestellt. Die Segmente 13 und 14 weisen vorliegend unterseitige Wartungsklappen auf, um manuellen Zugang zum Durchgang der Überladevorrichtung 10 zu erhalten.

Dargestellt und beschrieben ist eine Überladevorrichtung 10, die sich zum Durchführen eines Verfahrens zum Inbetriebnehmen oder Außerbetriebnehmen der Überladevorrichtung 10 bei einer insbesondere als Feldhäcksler ausgebildeten Erntemaschine 1 eignet. Das Verfahren weist ein Verbinden von Segmenten 12, 13, 14 der Überladevorrichtung 10 und danach ein Anschließen der Anschlussleitungen 23, 25, 27, 29 des Unterstützungssystems an die mehreren Anschlüsse 43, oder ein Trennen der Anschlussleitungen 23, 25, 27, 29 des Unterstützungssystems von den mehreren Anschlüssen 43 und danach ein Trennen von Segmenten 12, 13, 14 der Überladevorrichtung 10 auf.

### Bezugszeichenliste:

- 1: Erntemaschine
- 2: Ladebehälter
- 3: Maschinenrahmen
- 4: vertikale Achse
- 5: horizontale Achse
- 6: Drehkranz
- 7: Hubeinrichtung

- 10: Überladevorrichtung
- 11: freies Ende
- 12: Endstück-Segment
- 13: Zwischenstück-Segment
- 14: Stutzen-Segment
- 15: Verbindungsstelle
- 16: Unterseite
- 17: Montageplatte
- 18: Oberseite
- 20: Schwenkgelenk

- 21: Umlenkeinrichtung
- 22: Winkelsensor
- 23: Anschlussleitung (Winkelsensor)
- 24: Aktor
- 25: Anschlussleitung (Aktor)
- 26: Kamera
- 27: Anschlussleitung (Kamera)
- 28: Beleuchtungseinrichtung
- 29: Anschlussleitung (Beleuchtungseinrichtung)

- 40: Anschlusseinheit
- 42: Anschlussbank
- 43: Anschluss
- 44: Versorgungsleitung
- 45: Ausnehmung

- FR: Fahrtrichtung

## Patentansprüche

1. Selbstfahrende Erntemaschine (1), vorzugsweise Feldhäcksler, mit einer Überladevorrichtung (10) zum Überladen eines Erntegutstroms und mit einem an Versorgungsleitungen (44) der Erntemaschine (1) angeschlossenen Unterstützungssystem, das wenigstens teilweise an einem freien Ende (11) der Überladevorrichtung (10) angeordnet ist, **gekennzeichnet durch** eine an der Überladevorrichtung (10) angeordnete Anschlusseinheit (40) mit mehreren Anschlüssen (43) zum Anschließen von Anschlussleitungen (23,25,27,29) des Unterstützungssystems an die Versorgungsleitungen (44).

2. Erntemaschine (1) nach einem der voranstehenden Ansprüche, **dadurch gekennzeichnet, dass** die Überladevorrichtung (10) zumindest zwei miteinander verbundene Segmente (12,13,14) zum Führen des Erntegutstroms zum freien Ende (11) aufweist, von denen ein Endstück-Segment (12) das freie Ende (11) bereitstellt, von denen ein Segment (12,13,14), bevorzugt ein Stutzen-Segment (14), mit der Anschlusseinheit (40) versehen ist und insbesondere um eine vertikale Achse (4) drehbeweglich an einem Drehkranz (6) der Erntemaschine (1) montiert ist.

3. Erntemaschine (1) nach dem voranstehenden Anspruch, **dadurch gekennzeichnet, dass** die zumindest zwei Segmente (12,13,14) ein Zwischenstück-Segment (13) oder mehrere davon aufweisen, das/die zwischen dem Stutzen-Segment (14) und dem Endstück-Segment (12) vorgesehen ist/sind.

4. Erntemaschine (1) nach einem der voranstehenden zwei Ansprüche, **dadurch gekennzeichnet, dass** die Anschlusseinheit (40) im Bereich einer Verbindungsstelle (15) der zumindest zwei Segmente (12,13,14), und/oder
Dass die Anschlusseinheit (40) auf einer Unterseite (16) der Überladevorrichtung (10), insbesondere des Stutzen-Segments (14), angeordnet ist.

5. Erntemaschine (1) nach einem der voranstehenden Ansprüche, **dadurch gekennzeichnet, dass** die Überladevorrichtung (10), insbesondere das Stutzen-Segment (14), mit einer flächig daran angeordneten Montageplatte (17) versehen ist, wobei an der Montageplatte (17) die Anschlusseinheit (40) festgelegt ist.

6. Erntemaschine (1) nach einem der voranstehenden Ansprüche, **dadurch gekennzeichnet, dass** die Anschlusseinheit (40) eine Anschlussbank (42) mit den mehreren Anschlüssen (43) aufweist, insbesondere wobei die Anschlussbank (42) an der Montageplatte (17) festgelegt ist und/oder zumindest im Wesentlichen orthogonal zu der Überladevorrichtung (10), bevorzugt zu der Montageplatte (17), angeordnet ist.

7. Erntemaschine (1) nach dem voranstehenden Anspruch, **dadurch gekennzeichnet, dass** die mehreren Anschlüsse (43) in benachbarten Ausnehmungen (45) der Anschlussbank (42) festgelegt sind.

8. Erntemaschine (1) nach einem der voranstehenden Ansprüche, **dadurch gekennzeichnet, dass** die mehreren Anschlüsse (43) unterschiedlich ausgebildete Anschlusselemente aufweisen.

9. Erntemaschine (1) nach einem der voranstehenden Ansprüche, **dadurch gekennzeichnet, dass** die Anschlusseinheit (40) elektrische und hydraulische Anschlussleitungen (23,25,27,29) mit den Versorgungsleitungen (44) verbindet, bevorzugt werkzeuglos lösbar damit verbindet.

10. Erntemaschine (1) nach einem der voranstehenden Ansprüche, **dadurch gekennzeichnet, dass** das Unterstützungssystem eine zur Einstellung eines Auswurfwinkels des Erntegutstroms verschwenkbare Umlenkeinrichtung (21) mit einem Winkelsensor (22) zum Erfassen eines Schwenkwinkels der Umlenkeinrichtung (21) umfasst, wobei eine Anschlussleitung (23) des Winkelsensors (22) an einen elektrischen Anschluss der mehreren Anschlüsse (43) angeschlossen ist.

11. Erntemaschine (1) nach dem voranstehenden Anspruch, **gekennzeichnet durch** einen Aktor (24) zum Verschwenken der Umlenkeinrichtung (21), wobei eine Anschlussleitung (25) des Aktors (24) an einen elektrischen und/oder hydraulischen Anschluss der mehreren Anschlüsse (43) angeschlossen ist.

12. Erntemaschine (1) nach einem der voranstehenden Ansprüche, **dadurch gekennzeichnet, dass** das Unterstützungssystem eine Kamera (26) zum Erfassen eines Zielbereichs aufweist, wobei eine Anschlussleitung (27) der Kamera (26) an einen elektrischen Anschluss der mehreren Anschlüsse (43) angeschlossen ist.

13. Erntemaschine (1) nach einem der voranstehenden Ansprüche, **dadurch gekennzeichnet, dass** das Unterstützungssystem eine Beleuchtungseinrichtung (28) aufweist, wobei eine Anschlussleitung (29) der Beleuchtungseinrichtung (28) an einen elektrischen Anschluss der mehreren Anschlüsse (43) angeschlossen ist.

14. Überladevorrichtung (10) für eine selbstfahrende Erntemaschine (1), vorzugsweise für einen Feldhäcksler, wobei die Überladevorrichtung (10) zum Überladen eines Erntegutstroms ausgebildet ist und ein freies Ende (11) aufweist, wobei die Überladevorrichtung (10) zur Befestigung eines an Versorgungsleitungen (44) der Erntemaschine (1) anzuschließenden Unterstützungssystems wenigstens teilweise an dem freien Ende (11) ausgebildet ist, **gekennzeichnet durch** eine Anschlusseinheit (40) mit mehreren Anschlüssen (43) zum Anschließen von Anschlussleitungen (23,25,27,29) des Unterstützungssystems an die Versorgungsleitungen (44).

15. Verfahren zum Inbetriebnehmen oder Außerbetriebnehmen einer Überladevorrichtung (10) bei einer Erntemaschine (1) nach einem der voranstehenden Ansprüche oder einer Überladevorrichtung (10) nach dem voranstehenden Anspruch, **gekennzeichnet durch**
ein Verbinden von Segmenten (12,13,14) der Überladevorrichtung (10) und danach ein Anschließen der Anschlussleitungen (23,25,27,29) des Unterstützungssystems an die mehreren Anschlüsse (43), oder
ein Trennen der Anschlussleitungen (23,25,27,29) des Unterstützungssystems von den mehreren Anschlüssen (43) und danach ein Trennen von Segmenten (12,13,14) der Überladevorrichtung (10).
